(19) Europäisches Patentamt
European Patent Office
Office européen des brevets

(11) **EP 3 539 814 B1**

(12) **EUROPÄISCHE PATENTSCHRIFT**

(45) Veröffentlichungstag und Bekanntmachung des Hinweises auf die Patenterteilung:
**12.07.2023  Patentblatt 2023/28**

(21) Anmeldenummer: **19159643.6**

(22) Anmeldetag: **27.02.2019**

(51) Internationale Patentklassifikation (IPC):
**B60L 53/12** *(2019.01)*    **B60L 53/22** *(2019.01)*

(52) Gemeinsame Patentklassifikation (CPC):
**B60L 53/12; B60L 53/22;** B60L 2210/30;
Y02T 10/70; Y02T 10/7072; Y02T 10/72;
Y02T 90/14

(54) **LADEANORDNUNG FÜR KRAFTFAHRZEUGE MIT SCHALTUNGSSTEUERUNG AUF DER EMPFÄNGERSEITE**

LOADING ASSEMBLY FOR MOTOR VEHICLES WITH SHIFT CONTROL ON THE RECEIVER SIDE

DISPOSITIF DE CHARGE POUR VÉHICULES AUTOMOBILES À COMMANDE DE CIRCUIT SUR LE CÔTÉ RÉCEPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2018  DE 102018105608**

(43) Veröffentlichungstag der Anmeldung:
**18.09.2019  Patentblatt 2019/38**

(73) Patentinhaber: **Zollner Elektronik AG**
**93499 Zandt (DE)**

(72) Erfinder: **Jetz, Markus**
**94264 Langdorf (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(56) Entgegenhaltungen:
**DE-A1-102008 028 952      DE-A1-102010 060 957**
**GB-A- 2 369 463      US-A1- 2013 293 192**

• **Parspour Nejila: "Induktives Laden - ein Themenschwerpunkt der Elektromobilität", , 27 November 2014 (2014-11-27), pages 9-9, XP055808429, Retrieved from the Internet: URL:https://www.smart-systems-conference.de/wp-content/uploads/2014/S1/Parspour.pdf [retrieved on 2021-05-27]**

EP 3 539 814 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine induktive Ladeanordnung bzw. ein induktives Energieübertragungssystem. Derartige Energieübertragungssysteme sind aus dem Stand der Technik seit längerer Zeit bekannt. Die Erfindung befasst sich dabei insbesondere mit induktiven Energieübertragungssystemen für Kraftfahrzeuge. Diese Ladeanordnungen weisen üblicherweise eine erste Induktionsvorrichtung auf, welche ein elektrisches bzw. elektromagnetisches Feld erzeugt, sowie eine zweite Induktionsvorrichtung, welche dieses elektromagnetische Feld aufnimmt und einen entsprechenden Ladestrom erzeugt.

Derartige induktive Energieübertragungssysteme, und speziell induktive Ladegeräte, besitzen in der Regel fahrzeugseitig eine leistungselektronische Schaltung zur Gleichrichtung und Lastanpassung. Dabei ist es aus dem Stand der Technik bekannt, dass diese Gleichrichtung beispielsweise als Vollbrückengleichrichter oder auch als Spannungsverdoppler ausgeführt ist. Ein solches induktives Ladegerät ist aus US 2013/293192 A1 bekannt.

Daneben sind auch weitere Formen der Ausführung bekannt. Daneben ist es aus dem internen Stand der Technik der Anmelderin auch bekannt, aktive Gleichrichter einzusetzen, bei denen etwa die Dioden durch ansteuerbare Schalter, wie etwa Mosfet- oder IGBT-Transistoren ersetzt werden.

Vor allem bei Anwendungen wie dem Laden von Elektrofahrzeugen ändern sich jedoch die Kopplungswerte zwischen der Sende- und der Empfangsspule, insbesondere wegen der endlichen Positioniergenauigkeit der Empfangsspule zur Sendespule und den unterschiedlichen Fahrzeughöhen zum Teil sehr stark.

Auch das Niveau der Batteriespannung kann sich über weite Bereiche verändern, da oft mehrere Fahrzeugbaureihen mit unterschiedlichen Akkus mit dem gleichen Ladesystem ausgestattet werden sollen. Das Ladesystem muss dennoch über diese weiten Bereiche mit hohen Wirkungsgraden funktionieren. Eine aktive Lastanpassung ist eine Möglichkeit, die geforderte Funktion des Ladesystems über weite Arbeitsbereiche sicherzustellen.

Aus dem internen Stand der Technik der Anmelderin ist als Möglichkeit der aktiven Lastanpassung der Einsatz eines DC/DC-Wandlers bekannt. Der Einsatz eines DC/DC-Wandlers zur Lastanpassung erlaubt in der Regel eine stufenlose Lastanpassung über weite Bereiche. Allerdings ist der Einsatz eines DC/DC-Wandlers nicht immer geeignet, da für den Wandler zusätzlicher Bauraum benötigt wird. Auch aus Kostengründen wird, falls möglich, gerne auf den Einsatz des DC/DC-Wandlers verzichtet.

Der vorliegenden Erfindung liegt daher die Aufgabe zugrunde, eine Schaltungsanordnung zur Verfügung zu stellen, welche einerseits den unterschiedlichen Lastanforderungen genügt, und welche andererseits auf komplizierte Bauteile, wie beispielsweise DC/DC-Wandler verzichtet.

Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße induktive Ladeanordnung für Kraftfahrzeuge weist eine erste Induktionsvorrichtung auf, welche insbesondere stationär angeordnet ist, sowie eine zweite Induktionsvorrichtung, welche an dem Kraftfahrzeugt montierbar ist. Dabei weist die erste Induktionsvorrichtung eine erste Spuleneinrichtung auf und die zweite Induktionsvorrichtung weist eine zweite Spuleneinrichtung auf. Die erste Spuleneinrichtung und die zweite Spuleneinrichtung sind zur induktiven Energieübertragung geeignet und bestimmt, wobei die zweite Induktionsvorrichtung eine Steuerungseinrichtung aufweist, welche dazu geeignet und bestimmt ist, die zwischen der Spulenvorrichtung und der Last fließenden Stromfluss zu beeinflussen und/oder einen vorbestimmten und insbesondere optimierten oder optionalen Stromfluss zu ermöglichen.

Alternativ oder zusätzlich ist die Steuerungseinrichtung dazu geeignet und bestimmt, von der zweiten Spuleneinrichtung ausgegebene Ströme gesteuert an eine Last und insbesondere eine elektrische Last, wie insbesondere aber nicht ausschließlich eine Fahrzeugbatterie auszugeben.

Erfindungsgemäß weist diese Steuerungseinrichtung eine elektrischen Gleichrichtereinheit und eine elektrische Spannungsvervielfachereinheit auf, sowie eine Schalteinrichtung, welche eine Umschalten zwischen der Gleichrichtereinheit und der Spannungsvervielfachereinheit ermöglicht.

Es wird daher im Rahmen der Erfindung vorgeschlagen, die Funktion des oben genannten Gleichrichters und des DC/DC-Wandlers in einem Schaltungskonzept zu vereinen. Die hier vorgeschlagene Möglichkeit besteht darin, eine Kombination eines Gleichrichters und insbesondere eines Vollbrückengleichrichters und eines Spannungsverdopplers (etwa in Form einer Delon-Schaltung) zu kombinieren. Zu diesem Zweck ist eine Schalteinrichtung vorgesehen.

Diese Schalteinrichtung ist bevorzugt in der Lage, Wechselspannungen zu sperren und Wechselströme ein- und abzuschalten. Dabei kann bevorzugt diese Schalteinrichtung von einer Gleichrichtereinheit und insbesondere einem Vollbrückengleichrichter auf einen Spannungsverdoppler umgeschaltet werden.

Bevorzugt ist die Schalteinrichtung dazu geeignet und bestimmt, eine elektrische Verbindung zwischen der Gleichrichtereinheit und der Spannungsvervielfachereinheit herzustellen und/oder zu unterbrechen.

Die oben genannte erste Spuleneinrichtung kann auch als Sendespule und die zweite Spulenrichtung als Empfangsspule angesehen werden.

Bevorzugt ist weiterhin zwischen der Spuleneinrichtung und der Gleichrichtereinrichtung ein Kondensator angeordnet. Dieser Kondensator dient bevorzugt zur Blindleistungskompensation und bildet besonders bevorzugt zusammen mit der Spule mit der Induktivität L2 einen Schwingkreis. Das Ladesystem wird damit bevorzugt resonant betrieben.

Bevorzugt wirkt die gesamte Schaltung in einem Schaltzustand der Schalteinrichtung als reiner Gleichrichter, insbesondere als Vollbrückengleichrichter und in einem anderen Zustand zumindest auch als Spannungsvervielfacher.

Bei einer weiteren vorteilhaften Ausführungsform ist die Gleichrichtereinheit eine Vollbrücken-Gleichrichtereinheit. Bevorzugt weist die Gleichrichtereinheit wenigstens zwei, bevorzugt wenigstens vier Dioden, und insbesondere vier Dioden auf.

Bei einer weiteren bevorzugten Ausführungsform kann es sich bei der Spannungsvervielfachereinheit um eine Spannungsverdopplereinheit handeln. Insbesondere handelt es sich bei dieser Spannungsvervielfachereinheit um eine sogenannte Delon-Schaltung.

Erfindungsgemäß weist die Ladeanordnung eine Schaltsteuerungseinrichtung auf, welche dazu geeignet und bestimmt ist, einen Schaltzustand der Schalteinrichtung zu steuern.

Im Rahmen der induktiven Energieübertragung für das Laden von Elektrofahrzeugen bedeutet das Öffnen bzw. Schließen der Schalteinrichtung eine sprungförmige Änderung des äquivalenten Lastwiderstands. Dies wird unter Bezugnahme auf die Figuren genauer erläutert. Im Rahmen der hier beschriebenen Ausführungsform wird vorgeschlagen, die Schalteinrichtung nicht dauerhaft offen oder geschlossen zu betrieben, sondern die Ein- bzw. Ausschaltzeit zeitlich zu begrenzen.

Erfindungsgemäß ist die Schaltsteuerungseinrichtung dazu geeignet und bestimmt, Schaltzustände der Schalteinrichtung auf eine Betriebsfrequenz und insbesondere eine Arbeitsfrequenz eines Spulenstroms der (zweiten) Spuleneinrichtung zu synchronisieren. Genauer gesagt werden die Ein- und Ausschaltpunkte auf eine Arbeitsfrequenz des Empfangsspulenstroms synchronisiert. Bevorzugt kann dabei der Einschaltzeitpunkt beim Stromnulldurchgang gewählt werden.

Damit wird die Schalteinrichtung bei Nullstrom eingeschaltet (ZCS, Zero-Current-Switching).

Auf diese Weise werden die Schaltverluste und die EMI-Signatur effektiv verringert.

In der erfindungsgemäßen Ausführungsform wird die Schalteinrichtung mit einer Frequenz betrieben, die höher ist als 10 kHz, bevorzugt größer als 20 kHz, bevorzugt größer als 40 kHz, bevorzugt größer als 50 kHz, bevorzugt größer als 60 kHz und bevorzugt größer als 75 kHz.

Weiterhin wird In der erfindungsgemäßen Ausführungsform die Schalteinrichtung mit einer Frequenz betrieben, die kleiner ist als 200 kHz, bevorzugt kleiner als 150 kHz, bevorzugt kleiner als 130 kHz, bevorzugt kleiner als 100 kHz und bevorzugt kleiner als 95 kHz.

Bevorzugt wird zur Ansteuerung der Schalteinrichtung und insbesondere für die zeitliche Ansteuerung der Schalteinrichtung ein Phasenanschnitt und/oder ein Phasenabschnitt verwendet.

Bei einer weiteren vorteilhaften Ausführungsform weist die Schalteinrichtung eine halbleiterbasierte Schalteinrichtung auf und insbesondere einen Mosfet-Halbleiterschalter. Da Mosfets eine Bodydiode besitzen, sind sie nicht in der Lage, Wechselspannungen zu sperren. Da es für die hier beschriebene Anwendung erforderlich ist, auch Wechselspannungen sperren zu können, und Wechselströme sowohl ein- als auch abzuschalten, wird eine besondere Ausführung der Schalteinrichtung vorgeschlagen.

Bei einer vorteilhaften Ausführungsform weist die Schalteinrichtung wenigstens einen Mosfet-Transistor und/oder mehrere Dioden auf. Dabei ist es beispielsweise möglich, dass die Schalteinrichtung als Gleichrichtereinrichtung und/oder als Vollbrückengleichrichter-Einrichtung mit darauf folgendem Mosfet-Transistor ausgestaltet ist. Es wäre jedoch auch möglich, dass die Schaltung zwei Mosfet-Transistoren und zwischen diesen liegende Dioden aufweist. Daneben könnte die Schaltungsreinrichtung auch in Form von zwei Mosfet-Transistoren aufgebaut sein. Bevorzugt jedoch ist die Schalteinrichtung auf Basis von Mosfet-Transistoren aufgebaut.

Neben Mosfet-Transistoren könnten jedoch auch IGBT-Transistoren für die Schalteinrichtung eingesetzt werden.

Bei einer weiteren vorteilhaften Ausführungsform weist die Steuerungseinrichtung und insbesondere die Spannungsvervielfachereinheit wenigstens einen und bevorzugt wenigstens zwei Kondensatoren auf, wobei diese Kondensatoren bevorzugt eine Kapazität aufweisen, welche größer ist als 0,5 $\mu$F, bevorzugt größer als 1 $\mu$F und besonders bevorzugt größer als 2 $\mu$F.

Bei einer weiteren bevorzugten Ausführungsform weisen diese beiden Kondensatoren eine Kapazität aus, welche wenigstens doppelt so groß ist wie die Kapazität des Resonanzkondensators, bevorzugt wenigstens 3mal so groß, bevorzugt wenigstens 5mal so groß, besonders bevorzugt wenigstens 7mal so groß, besonders bevorzugt wenigstens 8mal so groß und besonders bevorzugt wenigstens 10mal so groß.

Bevorzugt werden als Kondensatoreinrichtungen Keramikkondensatoren verwendet. Bevorzugt sind dabei mehrere Keramikkondensatoren parallel zueinander geschaltet. Es können aber auch geeignete Folienkondensatoren eingesetzt werden.

Es ist zweckmäßig, die genannten Kapazitäten Cd1 und Cd2 dieser Kondensatoren so zu dimensionieren, dass sich bei maximal auftretenden Strömen praktisch konstante Gleichspannungen uCd1 (t) und uCd2(t) mit geringen Spannungsrippeln im Bereich von weniger als 10 % einstellen.

Damit gilt für die Resonanzfrequenz fres2 des fahrzeugseitigen Resonators, der eine Empfangsspule und eine Induktivität mit einem Resonanzkondensator mit einer bestimmten Kapazität C2 aufweist, die folgende Gleichung:

$$fres2 = 1/(2*\pi*sqrt(L2*C2))$$

Werden die Kapazitäten der Kondensatoren der Spannungsvervielfacher zu gering dimensioniert, resultiert ein erheblicher Spannungsrippelanteil bei uCd1(t) und uCd2(t). Dies hat eine Rückwirkung auf den Resonator zur Folge und die oben genannte Gleichung für die Resonanzfrequenz gilt nicht mehr. Da der Spannungsrippel von der Höhe der Ströme abhängig ist, wird so die Resonanzfrequenz lastabhängig. Dieser Effekt würde das Gesamtverhalten des fahrzeugseitigen Systems unnötig verkomplizieren, so dass die oben erwähnte ausreichende Dimensionierung der Kapazitäten vorgeschlagen wird.

Bei einer weiteren vorteilhaften Ausführungsform ist die Schaltsteuerungseinrichtung dazu geeignet und bestimmt, die Schalteinrichtung mit einem vorgegebenen Ansteuerverfahren anzusteuern, wobei dieses Ansteuerverfahren aus einer Gruppe von Ansteuerverfahren ausgewählt ist, welche eine Bipolar-Halbschwingungsphasenwinkel-Ansteuerung, eine Bipolar-Vollschwingungsphasenwinkel-Ansteuerung, eine Pulspaket-Ansteuerung oder eine Kombination aus diesen Ansteuerungen enthält.

Die vorliegende Erfindung ist weiterhin auf eine Induktionsvorrichtung für Kraftfahrzeuge gerichtet, welche an dem Kraftfahrzeug montierbar ist, wobei die Induktionsvorrichtung eine Spuleneinrichtung zur induktiven Energieaufnahme aufweist und wobei die Induktionsvorrichtung eine Steuerungseinrichtung aufweist, welche dazu geeignet und bestimmt ist, die zwischen der Spulenvorrichtung und der Last fließenden Stromfluss zu beeinflussen und/oder einen vorbestimmten und insbesondere optimierten oder optionalen Stromfluss zu ermöglichen.

Alternativ oder zusätzlich ist die Steuerungseinrichtung dazu geeignet und bestimmt, von der zweiten Spuleneinrichtung ausgegebene Ströme gesteuert an eine Last und insbesondere eine elektrische Last, wie insbesondere aber nicht ausschließlich eine Fahrzeugbatterie auszugeben.

Erfindungsgemäß weist die Steuerungseinrichtung eine elektrische Gleichrichtereinheit und elektrische Spannungsvervielfachereinheit auf, sowie eine Schalteinrichtung, welche ein Umschalten zwischen der Gleichrichtereinheit und der Spannungsvervielfachereinheit ermöglicht.

Bevorzugt ist die Induktionsvorrichtung in der oben beschriebenen Weise ausgestaltet.

Die vorliegende Erfindung ist weiterhin auch an ein Verfahren zum Betreiben einer induktiven Ladeanordnung für Kraftfahrzeuge gerichtet, wobei von einer ersten Induktionseinrichtung über erste Spuleneinrichtung der ersten Induktionseinrichtung ein elektromagnetisches Feld ausgegeben wird und dieses elektromagnetische Feld von einer zweiten Spuleneinrichtung und einer zweiten Induktionsvorrichtung aufgenommen wird und diese zweite Spuleneinrichtung in Reaktion auf dieses elektrische bzw. elektromagnetische Feld einen elektrischen Strom ausgibt und wobei eine Steuerungsreinrichtung diesen elektrischen Strom gesteuert an eine Last ausgibt.

Erfindungsgemäß richtet diese Steuerungseinrichtung den von der zweiten Spuleneinrichtung ausgegebenen Strom wenigstens zeitweise mittels einer elektrischen Gleichrichtereinheit gleich und es wird wenigstens zeitweise mittels einer elektrischen Spannungsvervielfachereinheit eine Spannungsvervielfachung vorgenommen, wobei wenigstens zeitweise mittels einer Schalteinrichtung eine Umschaltung zwischen Gleichrichtereinheit und der Spannungsvervielfachereinheit vorgenommen wird.

Bevorzugt wird diese Schalteinrichtung ebenfalls von einer Schaltsteuerungseinrichtung angesteuert. Vorteilhaft wird dabei die Schalteinrichtung auf eine Arbeitsfrequenz des Spulenstroms der zweiten Spuleneinrichtung synchronisiert. Bevorzugt wird die Schalteinrichtung mit einer Frequenz betrieben, welche zwischen 60 kHz und 150 kHz liegt. Bevorzugt werden die oben angegebenen Frequenzen verwendet.

Bei einem weiteren bevorzugten Verfahren wird zur Ansteuerung der Schalteinrichtung ein Phasenabschnitt und/oder ein Phasenanschnitt der jeweiligen Ströme verwendet.

Weitere Vorteile und Ausführungsformen ergeben sich aus den beigefügten Zeichnungen:
Darin zeigen

| | |
|---|---|
| Fig. 1 | eine grob schematische Darstellung einer Ladeanordnung für Kraftfahrzeuge; |
| Fig. 2 | eine Darstellung einer Schaltungsanordnung nach dem Stand der Technik; |
| Fig. 3 | eine Darstellung einer Schaltungsanordnung nach dem Stand der Technik; |
| Fig. 4 a, 4 b | zwei weitere Darstellungen von Schaltungsordnungen nach dem internen Stand der Technik der Anmelderin; |
| Fig. 5 | eine Darstellung einer ersten Ausführungsform einer erfindungsgemäßen Schaltungsanordnung; |
| Fig. 6 a | eine Darstellung einer weiteren Ausführungsform einer erfindungsgemäßen Schaltungsanordnung; |
| Fig. 6 b | ein Ersatzschaltbild der in Fig. a gezeigten Schaltungsanordnung; |

Fig. 7        eine Darstellung von Stromverläufen bei geöffneter Schalteinrichtung;

Fig. 8        eine Darstellung von Stromverläufen bei geschlossener Schalteinrichtung;

Fig. 9 a - c        drei mögliche Ausgestaltungen der Schalteinrichtung;

Fig. 10        ein Stromverlauf für eine erste Ansteuerung der Schalteinrichtung;

Fig. 11        ein Stromverlauf für eine zweite Ansteuerung der Schalteinrichtung;

Fig. 12        ein Stromverlauf für eine dritte Ansteuerung der Schalteinrichtung;

Fig. 13        ein Stromverlauf für eine vierte Ansteuerung der Schalteinrichtung; und

Fig. 14        ein Stromverlauf für eine fünfte Ansteuerung der Schalteinrichtung.

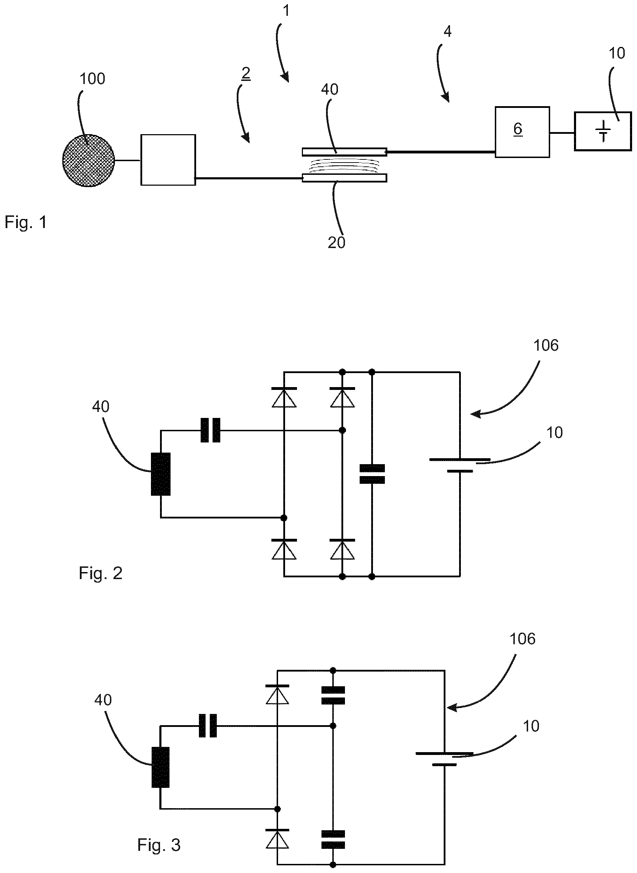

Fig. 1 zeigt eine schematische Darstellung einer Ladeanordnung 1 zum Laden von Kraftfahrzeugen, genauer zu Laden einer Batterie 10. Dabei wird aus einem Stromnetz 10 mittels einer in ihrer Gesamtheit mit 2 bezeichneten ersten Induktionsverrichtung Strom entnommen. Das Bezugszeichen 20 kennzeichnet eine erste Spuleneinrichtung, welche induktiv eine zweite Spuleneinrichtung 40, welche Bestandteil der zweiten Induktionsvorrichtung 40 ist, mit Strom, genauer mit einem elektromagnetischen Feld versorgt.

Das Bezugszeichen 6 kennzeichnet grob schematisch eine Steuerungseinrichtung, welche die von der Spuleneinrichtung 40 ausgegebenen Ströme an die Last bzw. die Batterie 10 weiterleitet.

Fig. 2 zeigt eine derartige Steuerungseinrichtung 106 nach dem Stand der Technik. In dieser Ausführungsform handelt es sich bei der Steuerungseinrichtung um einen Vollbrückengleichrichter. Bei der in Fig. 3 gezeigten Ausgestaltung handelt es sich bei der Steuerungseinrichtung um einen Spannungsverdoppler. Derartige Spannungsverdoppler funktionieren mit Hilfe von Kondensatoren und Dioden und erzeugen aus einer zugeführten Wechselspannung eine betragsmäßig höhere Gleichspannung, als mit einem Gleichrichter erreicht werden kann.

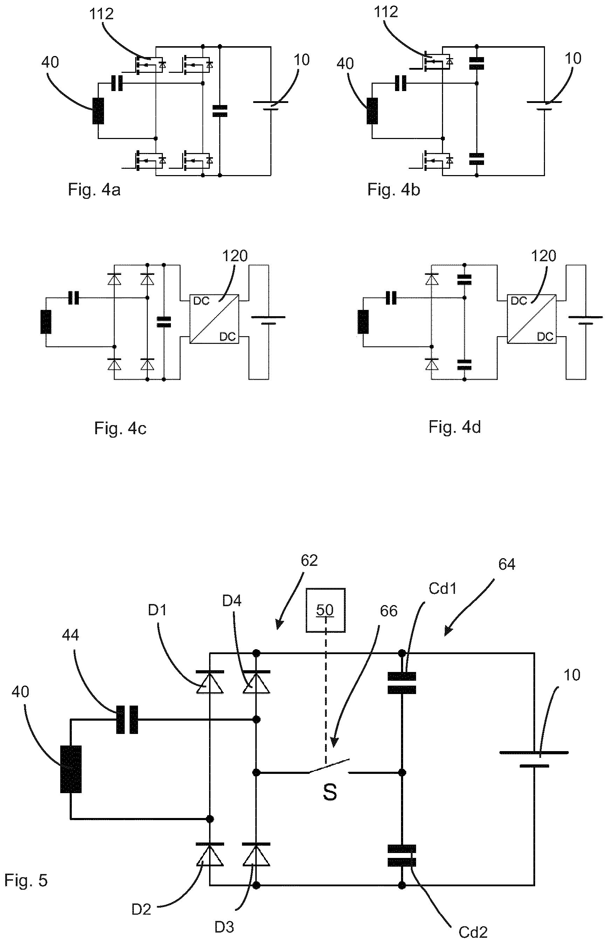

Die Fig. 4 a und 4 b zeigen ebenfalls aus dem internen Stand der Technik der Anmelderin bekannte Vollbrückengleichrichter (vergleiche Fig. 4 a) sowie Spannungsverdoppler (vergleiche Fig. 4 b), die hier als aktive Gleichrichter ausgeführt sind. Derartige Gleichrichter erlauben, beispielsweise durch Phasenanschnittsteuerung eine gesteuerte Gleichrichtung. Dabei sind jeweils Schaltelemente 112 vorgesehen.

Die Fig. 4 c und 4 d zeigen Ausgestaltungen ähnlich den in Fig. 4 a und 4 b gezeigten Schaltungen, wobei hier dem Vollbrückengleichrichter (vergleiche Fig. 4 c) bzw. dem Spannungsverdoppler (vergleiche Fig. 4 d) jeweils ein DC/DC-Wandler 120 nachgeschaltet ist.

Fig. 5 zeigt eine Darstellung einer erfindungsgemäßen Schaltungseinrichtung. Bei dieser Ausgestaltung ist wiederum die zweite Spuleneinrichtung 40 vorgesehen, sowie auch ein zu dieser in Serie geschalteter Kondensator 44, der damit einen RC-Schwingkreis aufbaut. Die Dioden D1 bis D4 sind die vier Dioden des Vollbrückengleichrichters 62.

Die beiden Kondensatoren Cd1 und Cd2 sind Bestandteile auch eines Spannungsverdopplers. Mittels einer Schalteinrichtung 66 kann zwischen dem Vollbrückengleichrichter einerseits und einer Spannungsverdopplerschaltung andererseits geschalten werden. Wenn die Schalteinrichtung geöffnet ist, entspricht das Schaltbild im Wesentlichen dem in Fig. 2 gezeigten Schaltbild und wenn die Schalteinrichtung geschlossen ist, entspricht das Schaltbild im Wesentlichen der in Fig. 3 gezeigten Situation.

Das Bezugszeichen 50 kennzeichnet grob schematisch eine Schaltersteuereinrichtung, welche eine Ansteuerung des Schalters S übernimmt. Damit handelt es sich bei der in Fig. 5 gezeigten erfindungsgemäßen Ausgestaltung um einen umschaltbaren Vollbrückengleichrichter und Spannungsverdoppler.

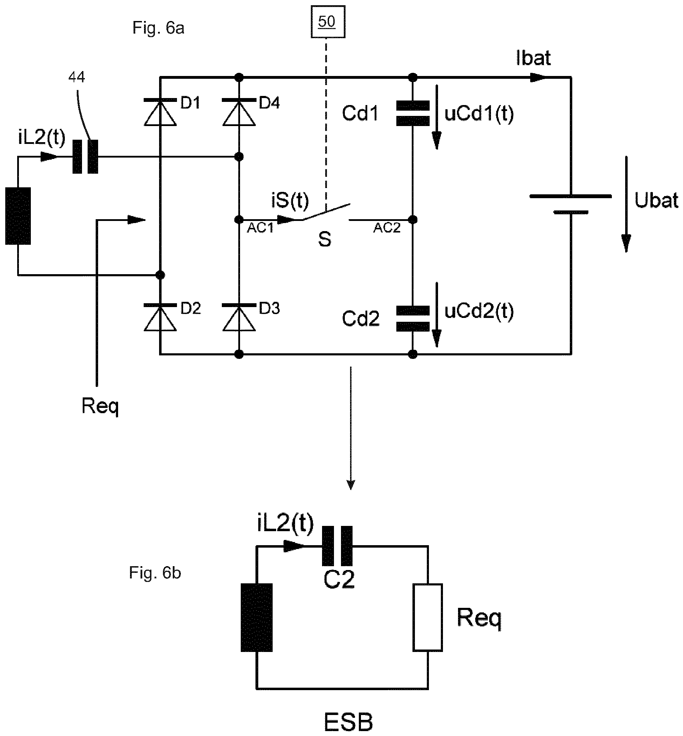

Die Fig. 6 a und 6 b zeigen die Schaltung aus Fig. 5 zur genaueren Erläuterung. Hierbei sind auch teilweise die jeweiligen Spannungen und Ströme eingezeichnet. Für die induktive Energieübertragung für das Laden in Elektrofahrzeugen bedeutet das Öffnen bzw. Schalten der Schalteinrichtung 66 aus Fig. 5 eine sprunghafte Änderung des äquivalenten Lastwiderstands Req (der sich insgesamt aus den in Fig. 6a gezeigten Komponenten ergibt).

In Fig. 6 b ist die Schaltung mit einem linearen Ersatz-Schaltbild (ESB) dargestellt. Für die nachfolgende Betrachtung werden sämtliche Komponenten als ideal und verlustlos angenommen. Die Kapazitäten Cd1 und Cd2 sind als unendlich hoch angenommen. Auf diese Weise können für Spannungen über den Kapazitäten im eingeschwungenen Zustand konstante Gleichspannungen angenommen werden. In diesem Fall gilt:

$$U_{Cd1}(t) = U_{Cd1} \quad \text{(Gleichung 1)}$$

Dies bedeutet, dass die Spannung über den ersten Kondensator bzw. ersten Kapazität konstant ist. Weiterhin gilt:

$$U_{Cd2}(t) = U_{Cd2} \quad \text{(Gleichung 2)}$$

Dies bedeutet, dass auch die Spannung über dem zweiten Kondensator bzw. zweiten Kapazität konstant ist.

Weiterhin gelten in guter Näherung die folgenden Beziehungen:

$$Pbat = Ubat * Ibat \text{ (Gleichung 3)}$$

Dies bedeutet, dass die Ladeleistung für die Batterie sich aus dem Produkt der Ladespannung Ubat und dem Ladestrom Ibat ergibt. Weiterhin gilt:

$$Req\_Soff = 8 / \pi^2 * Ubat^2 / Pbat \text{ (Gleichung 4)}$$

Dabei bezeichnet Req_Soff den äquivalenten Lastwiderstand bei offener Schalteinrichtung.
Daneben gilt die Gleichung:

$$Req\_Son = 2 / \pi^2 * Ubat^2 / Pbat \quad \text{(Gleichung 5)}$$

Dabei bezeichnet Req_Son den äquivalenten Lastwiderstand bei geschlossenem Schalter.
Insbesondere aus den beiden letzten Beziehungen ergibt sich, dass der äquivalente Lastwiderstand Req sich durch ein Öffnen oder Schließen der Schalteinrichtung 66 um den Faktor 4 verändert werden kann. Es gilt

$$Req\_Soff / Req\_Son = 4 \quad \text{(Gleichung 6)}.$$

Dies bezeichnet das Verhältnis der äquivalenten Lastwiderstände.

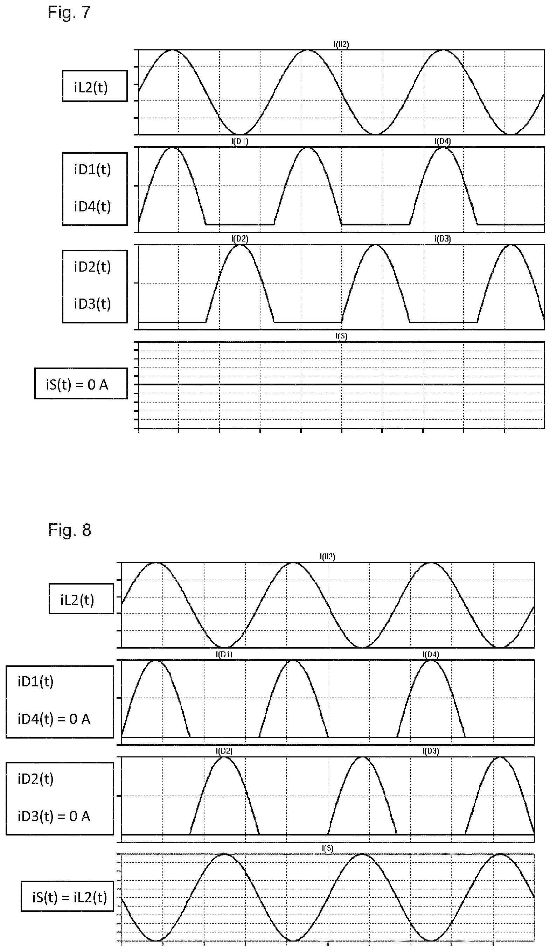

Fig. 7 zeigt die auftretenden Stromverläufe bei offener Schalteinrichtung. Fig. 8 zeigt die jeweiligen Ströme bei geschlossener Schalteinrichtung. Dabei ist das Eingangssignal bzw. der Eingangsstrom iL2(t) jeweils als sinusförmiges Eingangssignal angenommen. Die Stromverläufe iD1(t) bis iD4(t) bezeichnen die Stromverläufe an den einzelnen Dioden. Bei offenem Schalter ist der am Schalter fließende Strom iS(t) gleich null.
Bei geschlossenem Schalter sind die Ströme an den Dioden D3 und D4 jeweils null, da die Ströme über die Schalteinrichtung abfließen. Der Strom an der Schalteinrichtung iS(t) ist ebenfalls in Fig. 8 dargestellt.

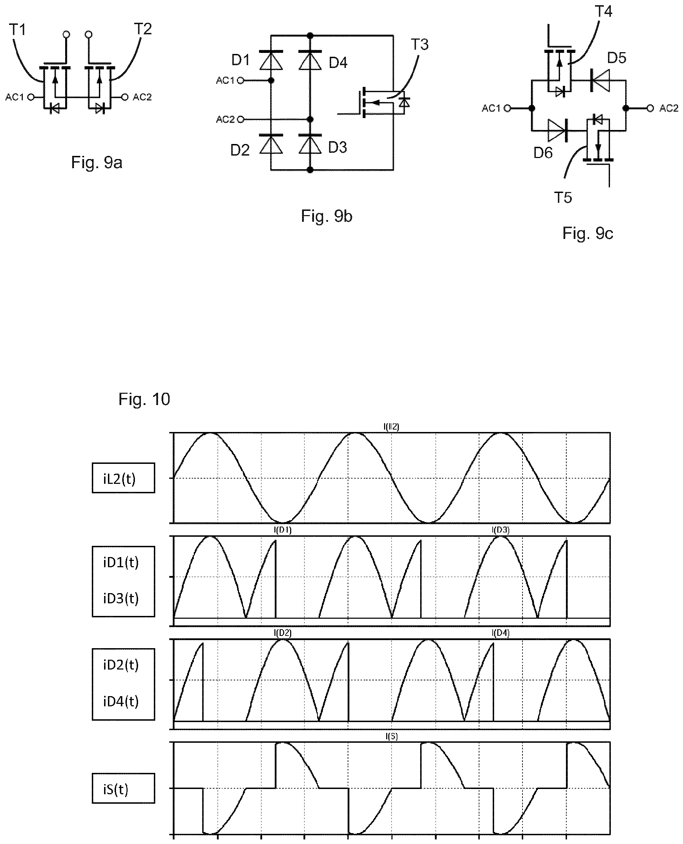

Die Fig. 9 a bis 9 c zeigen drei mögliche Ausführungsformen für eine Schalteinrichtung 62. Dabei beziehen sich die Bezugszeichen T1 bis T5 jeweils auf Mosfet-Transistoren und die Bezugszeichen D1 bis D6 jeweils auf Dioden. Die Bezugszeichen AC1 und AC2 kennzeichnen die jeweiligen Stromzuführungen. Man erkennt, dass hier diese Schaltungen zumindest einen Mosfet-Transistor aufweisen und entweder zwei oder vier zusätzliche Dioden vorgesehen sind. Bei allen Schaltungsausgestaltungen wird bevorzugt eine vollständige Symmetrierung der jeweils auftretenden Ströme bzw. Spannungen erreicht.
Die Fig. 10 bis 14 zeigen jeweils Stromverläufe der unterschiedlichen Ansteuerungen der Schalteinrichtung. Fig. 10 veranschaulicht eine Bipolar-Halbschwingungsphasenwinkel-Ansteuerung der Schalteinrichtung. Bei dieser Art der Ansteuerung ändert die Schalteinrichtung 66 bei jedem Stromnulldurchgang ihren Schaltzustand. Da jede Vollschwingung der Frequenz f zwei Stromnulldurchgänge aufweist, wird die Schalteinrichtung mit der doppelten Frequenz f angesteuert. Nach dem Abschalten der Schalteinrichtung 66 übernehmen abwechselnd die Dioden D3 und D4 den Schalterstrom iS(t).
Auf diese Weise ergibt sich ein symmetrisches Auf- und Entladen der Kapazitäten Cd1 und Cd2. Die Spannungen UCD1 und UCD2 können ebenfalle symmetrisch gehalten werden. Hierzu geben sich die in Figur 10 dargestellten Signalverläufe.

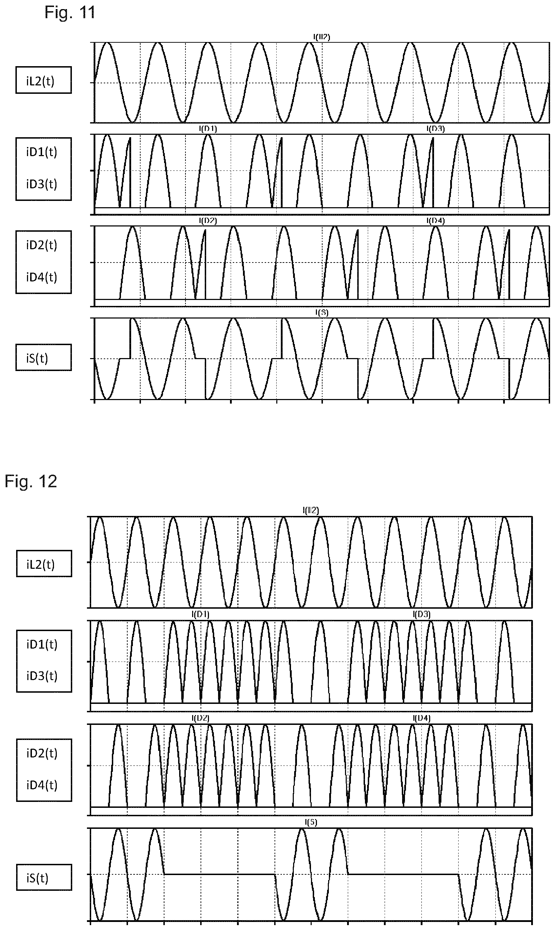

Fig. 11 zeigt eine Bipolar-Vollschwingungsphasen-Winkelansteuerung. Bei dieser Ausgestaltung folgt der Halbschwingung mit dem Schaltereignis immer eine Einschaltzeit der Schalteinrichtung 66, welche einem ganzzahligen Vielfachen der Periodendauer entspricht. Auf diese Weise wird sichergestellt, dass die Halbschwingungen mit den Schaltereignissen abwechselnd die Polarität ändern.
Dies führt dazu, dass die Dioden D3 und D4 den Schalterstrom IS(t) abwechselnd übernehmen. Auf diese Weise ergibt sich ein symmetrisches Auf- und Entladen der Kapazitäten Cd1 und Cd2. Die Spannungen UCd1(t) und UCd2(t) können ebenfalls symmetrisch gehalten werden. Fig. 11 zeigt die entsprechenden Signalverläufe. Die Schalteinrichtung ändert bei jedem dritten Stromnulldurchgang ihren Schaltzustand. Jede dritte Halbschwingung weist ein Abschaltereignis auf. Nach der Halbschwingung mit dem Schaltereignis folgt eine Einschaltzeit der Schalteinrichtung von einer vollständigen Periode.
Fig. 12 zeigt eine Darstellung einer Pulspaketansteuerung. Bei der dieser Art der Ansteuerung ändert die Schalteinrichtung nur während eines Stromnulldurchgangs ihren Schaltzustand. Die Einschaltzeit und die Ausschaltzeit sind bevorzugt ganzzahlige Vielfache der Periodendauer. Auf diese Weise entstehen Pulspakete, welche n Vollschwingungen enthalten und Pausenzeiten von m Perioden aufweisen. Fig. 12 zeigt entsprechend die zugehörigen Signalverläufe für eine Einschaltzeit der Schalteinrichtung von N = 2 Perioden und eine Ausschaltzeit von M = 3 Perioden.

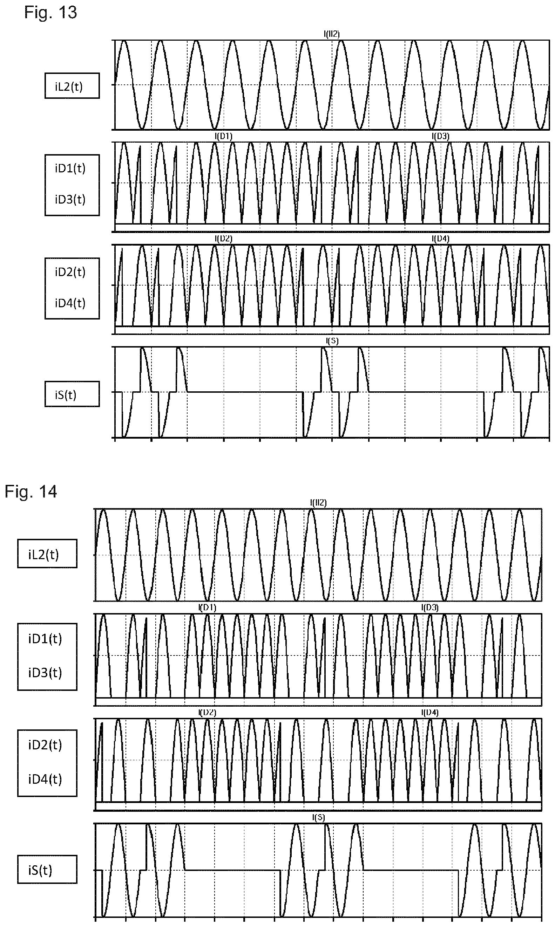

Fig. 13 veranschaulicht eine erste Mischform aus Bipolar-Halbphasenwinkel-Ansteuerung und Pulspaketansteuerung. Dabei sind wiederum die zugehörigen Signalverläufe für eine Ausschaltzeit der Schalteinrichtung von drei Perioden gezeigt. Der Pausenzeit von drei Perioden folgen zwei Perioden mit hochfrequenten (2*f) Schaltereignissen, wie es auch für die Bipolar-Halbschwingungsphasenwinkel-Ansteuerung typisch ist.

Fig. 14 schließlich zeigt eine Mischform aus eine Bipolar-Vollschwingungsphasenwinkel-Ansteuerung und einer Pulspaketansteuerung. Hier werden wiederum die zugehörigen Signalverläufe für eine Ausschaltzeit der Schalteinrichtung von drei Perioden gezeigt. Der Pausenzeit von drei Perioden folgen drei Perioden mit hochfrequenten (f) Schaltereignissen, sowie es auch für die Bipolar-Vollschwingungsphasenwinkel-Ansteuerung typisch ist.

Bezugszeichenliste

| | |
|---|---|
| 1 | Ladeanordnung |
| 2 | erste Induktionsvorrichtung |
| 4 | zweite Induktionsvorrichtung |
| 6 | Steuerungseinrichtung |
| 10 | Last |
| 20 | erste Spuleneinrichtung |
| 40 | zweite Spuleneinrichtung |
| 44 | Resonanzkondensator |
| 50 | Schaltsteuereinrichtung |
| 62 | Gleichrichtereinheit |
| 64 | Spannungsverdopplereinheit |
| 66 | Schalteinrichtung |
| 106 | Schalteinrichtung (StdT) |
| 112 | Schaltelement |
| 120 | DC/DC - Wandler |
| D1 - D6 | Dioden |
| T1 - T5 | Transistoren |
| Cd1, Cd2 | Kondensatoren, Kapazitäten |
| $uCd1(t)$ | Spannung an Kondensator Cd1 |
| $uCd2(t)$ | Spannung an Kondensator Cd2 |
| $iS(t)$ | Strom an Schalteinrichtung 66 |
| $iL2(t)$ | Strom der Spuleneinrichtung 40 |
| Req | Ersatzwiderstand |
| Ibat | Strom an Batterie |
| Ubat | Spannung an Batterie |
| $iD1(t) - iD4(t)$ | Diodenströme |

**Patentansprüche**

1. Induktive Ladeanordnung (1) für Kraftfahrzeuge mit einer ersten Induktionsvorrichtung (2), welche insbesondere stationär angeordnet ist und einer zweiten Induktionsvorrichtung (4), welche an dem Kraftfahrzeug montierbar ist,

   wobei die erste Induktionsvorrichtung(2) eine erste Spuleneinrichtung (20) aufweist und die zweite Induktionsvorrichtung (4) eine zweite Spuleneinrichtung (40) und die erste Spuleneinrichtung (20) und die zweite Spuleneinrichtung (40) zur induktiven Energieübertragung geeignet und bestimmt sind, und wobei die zweite Induktionsvorrichtung (4) eine Steuerungseinrichtung (6) aufweist, welche dazu geeignet und bestimmt ist, die zwischen der zweiten Spuleneinrichtung (40) und einer Last (10) fließenden Ströme zu beeinflussen und/oder einen vorbestimmten Stromfluss zu ermöglichen
   wobei die Steuerungseinrichtung (6) eine elektrische Gleichrichtereinheit (62) und eine elektrische Spannungsvervielfachereinheit (64) aufweist,
   **gekennzeichnet durch** eine Schalteinrichtung (66) welche ein Umschalten zwischen der Gleichrichtereinheit (62) und der Spannungsvervielfachereinheit (64) ermöglicht, wobei die Schalteinrichtung (66) mit einer Frequenz betrieben wird, die höher als 10 kHz und kleiner als 200 kHz ist, und wobei

die Ladeanordnung eine Schaltsteuerungseinrichtung (50) aufweist, welche dazu geeignet und bestimmt ist, einen Schaltzustand der Schalteinrichtung (66) zu steuern und die Schaltsteuerungseinrichtung dazu geeignet und bestimmt ist, Schaltzeitpunkte der Schalteinrichtung auf eine Arbeitsfrequenz eines Spulenstroms der zweiten Spuleneinrichtung (40) zu synchronisieren.

2. Induktive Ladeanordnung (1) nach Anspruch 1,
**dadurch gekennzeichnet, dass**
die Gleichrichtereinheit (62) eine Vollbrückengleichrichtereinheit (62) ist.

3. Induktive Ladeanordnung (1) nach Anspruch 1,
**dadurch gekennzeichnet, dass**
die Schalteinrichtung (66) eine halbleiterbasierte Schalteinrichtung (66) und insbesondere ein Mosfet- Halbleiterschalter (66) ist.

4. Induktive Ladeanordnung (1) nach wenigstens einem der vorangegangenen Ansprüche,
**dadurch gekennzeichnet, dass**
die Schalteinrichtung (66) mehrere Mosfet-Transistoren (T1... T5) und/oder mehrere Dioden (D1, ... D6) aufweist.

5. Induktive Ladeanordnung (1) wenigstens einem der vorangegangenen Ansprüche, **dadurch gekennzeichnet, dass**
die Spannungsvervielfachereinheit (64) wenigstens zwei Kondensatoren aufweist, wobei diese Kondensatoren bevorzugt eine Kapazität aufweisen, welche größer ist als eine Kapazität eines Resonanzkondensators (44).

6. Induktive Ladeanordnung (1) nach dem vorangegangenen Anspruch,
**dadurch gekennzeichnet, dass**
die Schaltsteuerungseinrichtung (50) dazu geeignet und bestimmt ist, die Schalteinrichtung mit einem vorgegebenen Ansteuerverfahren anzusteuern, wobei dieses Ansteuerverfahren aus einer Gruppe von Ansteuerverfahren ausgewählt ist, welche eine Bipolar-Halbschwingungs-Phasenwinkel-Ansteuerung, eine Bipolar-VollschwingungsPhasenwinkel-Ansteuerung, eine Puls-Paket-Ansteuerung oder Kombination aus diesen Ansteuerungen enthält.

7. Induktionsvorrichtung (4) für Kraftfahrzeuge, welche gemäß der Ansprüche 1-6 ausgestaltet ist und welche an dem Kraftfahrzeug montierbar ist, wobei die Induktionsvorrichtung (4) eine Spuleneinrichtung (42) zur induktiven Energieaufnahme geeignet und bestimmt ist, und wobei die Induktionsvorrichtung (4) eine Steuerungseinrichtung (6) aufweist, welche dazu geeignet und bestimmt ist, die sich zwischen der zweiten Spuleneinrichtung und der Last fließenden Ströme zu beeinflussen und/oder einen vorbestimmten Stromfluss zu ermöglichen
**dadurch gekennzeichnet, dass**
die Steuerungseinrichtung (6) eine elektrische Gleichrichtereinheit (62) und eine elektrische Spannungsvervielfachereinheit (64) aufweist, sowie eine Schalteinrichtung (66) welche ein Umschalten zwischen der Gleichrichtereinheit (62) und der Spannungsvervielfachereinheit (64) ermöglicht.

8. Verfahren zum Betreiben einer induktiven Ladeanordnung (1) für Kraftfahrzeuge wobei von einer ersten Induktionsvorrichtung (2) über eine erste Spuleneinrichtung (20) der ersten Induktionseinrichtung ein elektromagnetisches Feld ausgegeben wird und diese elektromagnetische Feld von einer zweiten Spuleneinrichtung (40) einer zweiten Induktionseinrichtung (4) aufgenommen wird und diese zweite Spuleneinrichtung (40) in Reaktion auf dieses elektromagnetische Feld einen elektrischen Strom ausgibt, wobei eine Steuerungseinrichtung diesen elektrischen Strom gesteuert an eine Last (10) ausgibt,
**dadurch gekennzeichnet, dass**

die Steuerungseinrichtung (6) den von der zweiten Spuleneinrichtung ausgegebenen Strom wenigstens zeitweise mittels einer elektrischen Gleichrichtereinheit (62) gleichrichtet und wenigstens zeitweise mittels einer elektrischen Spannungsvervielfachereinheit eine Spannungsvervielfachung vorgenommen wird, wobei wenigstens zeitweise mittels einer Schalteinrichtung eine Umschaltung zwischen Gleichrichtereinheit (62) und der Spannungsvervielfachereinheit vorgenommen wird, wobei die Schalteinrichtung (66) mit einer Frequenz betrieben wird, die höher als 10 kHz und kleiner als 200 kHz ist, und wobei
die Ladeanordnung eine Schaltsteuerungseinrichtung (50) aufweist, welche dazu geeignet und bestimmt ist, einen Schaltzustand der Schalteinrichtung (66) zu steuern und die Schaltsteuerungseinrichtung dazu geeignet und bestimmt ist, Schaltzeitpunkte der Schalteinrichtung auf eine Arbeitsfrequenz eines Spulenstroms der zweiten Spuleneinrichtung (40) zu synchronisieren.

**Claims**

1.  Inductive charging arrangement (1) for motor vehicles having a first induction apparatus (2), which is arranged in particular in a stationary manner, and a second induction apparatus (4), which can be mounted on the motor vehicle,

    wherein the first induction apparatus (2) comprises a first coil device (20) and the second induction apparatus (4) comprises a second coil device (40) and the first coil device (20) and the second coil device (40) are suitable and intended for inductive energy transmission, and wherein the second induction apparatus (4) comprises a control device (6) which is suitable and intended for influencing the currents flowing between the second coil device (40) and a load (10) and/or for enabling a predetermined current flow,
    wherein the control device (6) comprises an electric rectifier unit (62) and an electric voltage multiplier unit (64), **characterized by** a switching device (66) enabling switching between the rectifier unit (62) and the voltage multiplier unit (64), wherein the switching device (66) is operated at a frequency higher than 10 kHz and lower than 200 kHz, and wherein
    the charging arrangement comprises a switching control device (50) which is suitable and intended to control a switching state of the switching device (66) and the switching control device is suitable and intended to synchronize switching times of the switching device to a working frequency of a coil current of the second coil device (40).

2.  Inductive charging arrangement (1) according to claim 1,
    **characterized in that**
    the rectifier unit (62) is a full-bridge rectifier unit (62).

3.  Inductive charging arrangement (1) according to claim 1,
    **characterized in that**
    the switching device (66) is a semiconductor-based switching device (66) and in particular a Mosfet semiconductor switch (66).

4.  Inductive charging arrangement (1) according to at least one of the preceding claims,
    **characterized in that**
    the switching device (66) has several Mosfet transistors (T1 ... T5) and/or several diodes (DI, ... D6).

5.  Inductive charging arrangement (1) according to at least one of the preceding claims,
    **characterized in that**
    the voltage multiplier unit (64) comprises at least two capacitors, wherein said capacitors preferably having a capacity which is larger than a capacity of a resonant capacitor (44).

6.  Inductive charging arrangement (1) according to the preceding claim, **characterized in that**
    the switching control device (50) is suitable and intended to drive the switching device with a predetermined drive method, wherein this drive method is selected from a group of drive methods which includes a bipolar half-swing phase angle drive, a bipolar full-swing phase angle drive, a pulse packet drive or combination of these drives.

7.  An induction apparatus (4) for motor vehicles, which is designed according to claims 1-6 and which is mountable on the motor vehicle, wherein the induction apparatus (4) comprises a coil device (42) suitable and intended for inductive energy absorption, and wherein the induction apparatus (4) comprises a control device (6) suitable and intended for influencing the currents flowing between the second coil device and the load and/or for enabling a predetermined current flow, **characterized in that**
    the control device (6) comprises an electric rectifier unit (62) and an electric voltage multiplier unit (64), and a switching device (66) enabling switching between the rectifier unit (62) and the voltage multiplier unit (64).

8.  Method for operating an inductive charging arrangement (1) for motor vehicles, wherein an electromagnetic field is output by a first induction apparatus (2) via a first coil device (20) of the first induction apparatus, and this electromagnetic field is picked up by a second coil device (40) of a second induction apparatus (4), and this second coil device (40) outputs an electric current in response to this electromagnetic field, wherein a control device outputting this electric current to a load (10) in a controlled manner,

**characterized in that**

the control device (6) rectifies the current output by the second coil device at least temporarily by means of an electrical rectifier unit (62) and voltage multiplication is carried out at least temporarily by means of an electrical voltage multiplier unit, wherein a switchover between the rectifier unit (62) and the voltage multiplier unit being carried out at least temporarily by means of a switching device, wherein the switching device (66) being operated at a frequency which is higher than 10 kHz and lower than 200 kHz, and wherein

the charging arrangement comprises a switching control device (50) which is suitable and intended to control a switching state of the switching device (66) and the switching control device is suitable and intended to synchronize switching times of the switching device to a working frequency of a coil current of the second coil device (40).

**Revendications**

1. Ensemble de charge par induction (1) pour des véhicules à moteur avec un premier dispositif d'induction (2), lequel est disposé en particulier de manière stationnaire, et un deuxième dispositif d'induction (4), lequel peut être monté sur le véhicule à moteur,

   dans lequel le premier dispositif d'induction (2) présente un premier système de bobine (20) et le deuxième dispositif d'induction (4) présente un deuxième système de bobine (40) et le premier système de bobine (20) et le deuxième système de bobine (40) sont adaptés pour et se destinent à la transmission d'énergie par induction, et dans lequel le deuxième dispositif d'induction (4) présente un système de commande (6) qui est adapté et se destine à influencer les courants circulant entre le deuxième système de bobine (40) et une charge (10) et/ou à permettre un flux de courant prédéfini,
   dans lequel le système de commande (6) présente une unité de redresseur électrique (62) et une unité de multiplicateur de tension électrique (64),
   **caractérisé par** un système de commutation (66), lequel permet une commutation entre l'unité de redresseur (62) et l'unité de multiplicateur de tension (64), dans lequel le système de commutation (66) fonctionne à une fréquence qui est supérieure à 10 kHz et inférieure à 200 kHz, et dans lequel
   l'ensemble de charge présente un système de commande de commutation (50), lequel est adapté pour et se destine à commander un état de commutation du système de commutation (66) et le système de commande de commutation est adapté pour et se destine à synchroniser des moments de commutation du système de commutation sur une fréquence de travail d'un courant de bobine du deuxième système de bobine (40).

2. Ensemble de charge par induction (1) selon la revendication 1,
   **caractérisé en ce que**
   l'unité de redresseur (62) est une unité de redresseur en pont complet (62).

3. Ensemble de charge par induction (1) selon la revendication 1,
   **caractérisé en ce que**
   le système de commutation (66) est un système de commutation basé sur des semi-conducteurs (66) et en particulier un commutateur à semiconducteur MOSFET (66).

4. Ensemble de charge par induction (1) selon au moins l'une quelconque des revendications précédentes,
   **caractérisé en ce que**
   le système de commutation (66) présente plusieurs transistors MOSFET (T1, ..., T5) et/ou plusieurs diodes (D1, ..., D6).

5. Ensemble de charge par induction (1) selon au moins l'une quelconque des revendications précédentes,
   **caractérisé en ce que**
   l'unité de multiplicateur de tension (64) présente au moins deux condensateurs, dans lequel lesdits condensateurs présentent de manière préférée une capacité, laquelle est plus importante qu'une capacité d'un condensateur à résonance (44).

6. Ensemble de charge par induction (1) selon la revendication précédente, **caractérisé en ce que**
   le système de commande de commutation (50) est adapté pour et se destine à piloter le système de commutation avec un procédé de pilotage spécifié, dans lequel ledit procédé de pilotage est choisi parmi un groupe de procédés de pilotage, lequel contient un pilotage à angle de phase à demi-oscillation bipolaire, un pilotage à angle de phase à oscillation entière bipolaire, un pilotage à ensemble d'impulsions ou une combinaison desdits pilotages.

7. Dispositif d'induction (4) pour des véhicules à moteur, lequel est configuré selon les revendications 1 - 6 et lequel peut être monté sur le véhicule à moteur, dans lequel le dispositif d'induction (4) présente un système de bobine (42) adapté pour et se destinant à l'absorption d'énergie par induction, et dans lequel le dispositif d'induction (4) présente un système de commande (6), lequel est adapté pour et se destine à influencer les courants circulant entre le deuxième système de bobine et la charge et/ou à permettre un flux de courant prédéfini,
**caractérisé en ce que**
le système de commande (6) présente une unité de redresseur électrique (62) et une unité de multiplicateur de tension électrique (64), ainsi qu'un système de commutation (66), lequel permet une commutation entre l'unité de redresseur (62) et l'unité de multiplicateur de tension (64).

8. Procédé pour faire fonctionner un ensemble de charge par induction (1) pour des véhicules à moteur, dans lequel un champ électromagnétique est envoyé par un premier dispositif d'induction (2) par l'intermédiaire d'un premier système de bobine (20) du premier système d'induction, et ledit champ électromagnétique est absorbé par un deuxième système de bobine (40) d'un deuxième système d'induction (4) et ledit deuxième système d'induction (40) envoie en réaction audit champ électromagnétique un courant électrique, dans lequel un système de commande envoie ledit courant électrique de manière commandée à une charge (10),
**caractérisé en ce que**

le système de commande (6) redresse au moins par intermittence au moyen d'une unité de redresseur électrique (62) le courant envoyé par le deuxième système de bobine et une multiplication de tension est réalisée au moins par intermittence au moyen d'une unité de multiplicateur de tension électrique, dans lequel une commutation entre une unité de redresseur (62) et l'unité de multiplicateur de tension est réalisée au moins par intermittence au moyen d'un système de commutation, dans lequel le système de commutation (66) fonctionne à une fréquence qui est supérieure à 10 kHz et est inférieure à 200 kHz, et dans lequel
l'ensemble de charge présente un système de commande de commutation (50), lequel est adapté pour et se destine à commander un état de commutation du système de commutation (66) et le système de commande de commutation est adapté pour et se destine à synchroniser des moments de commutation du système de commutation sur une fréquence de travail d'un courant de bobine du deuxième système de bobine (40).

Fig. 1

Fig. 2

Fig. 3

Fig. 4a

Fig. 4b

Fig. 4c

Fig. 4d

Fig. 5

Fig. 6a

Fig. 6b

ESB

Fig. 7

iL2(t)

iD1(t)
iD4(t)

iD2(t)
iD3(t)

iS(t) = 0 A

Fig. 8

iL2(t)

iD1(t)
iD4(t) = 0 A

iD2(t)
iD3(t) = 0 A

iS(t) = iL2(t)

T1            T2

AC1                    AC2

Fig. 9a

D1      D4        T3

AC1

AC2

D2      D3

Fig. 9b

T4

D5

AC1                    AC2

D6

T5

Fig. 9c

Fig. 10

I(I2)

iL2(t)

I(D1)                    I(D3)

iD1(t)

iD3(t)

I(D2)                    I(D4)

iD2(t)

iD4(t)

I(S)

iS(t)

Fig. 11

Fig. 12

Fig. 13

Fig. 14

**IN DER BESCHREIBUNG AUFGEFÜHRTE DOKUMENTE**

**In der Beschreibung aufgeführte Patentdokumente**

- US 2013293192 A1